# EUROPEAN PATENT APPLICATION

(11) **EP 4 654 021 A1**
(43) Date of publication of application: **26.11.2025**
(21) Application number: 23919437.6
(22) Date of filing: 21.11.2023
(51) Int. Cl.: G06F 11/34

(54) **DIAL TEST SOURCE DETERMINATION METHOD AND APPARATUS, AND COMPUTING DEVICE CLUSTER**

(30) Priority: 31.01.2023 CN 202310066169
(71) Applicant: Huawei Cloud Computing Technologies Co., Ltd., Guiyang, Guizhou 550025 (CN)
(72) Inventor: YAN, Minzhi, Guiyang, Guizhou 550025 (CN); YANG, Yi, Guiyang, Guizhou 550025 (CN)
(74) Representative: Goddar, Heinz J.
(86) International application number: PCT/CN2023/132925
(87) International publication number: WO 2024/159873

(57) **Abstract**

This application provides a dialing test source determining method and apparatus, and a computing device cluster. In embodiments, the method is applied to a cloud management platform, and includes: providing a configuration interface, where the configuration interface is configured to obtain a dialing test instruction that is set by a user, and the dialing test instruction includes a target service on which a dialing test is to be performed; obtaining, from a database, a set of services that have called the target service, where the database includes a call relationship between multiple services including the target service; and determining a dialing test source based on at least one server corresponding to the set of services that have called the target service, where a server on which a service in the service set is deployed belongs to at least one network segment, and the at least one server also belongs to the at least one network segment. In conclusion, only the service on which the dialing test is to be performed needs to be manually configured, and the cloud management platform automatically determines the dialing test source based on the service call relationship, and does not need to configure the dialing test source. This reduces complexity of dialing test source configuration.

## Description

This application claims priority to Chinese Patent Application No. 202310066169.6, filed with the China National Intellectual Property Administration on January 31, 2023 and entitled "DIALING TEST SOURCE DETERMINING METHOD AND APPARATUS, AND COMPUTING DEVICE CLUSTER", which is incorporated herein by reference in its entirety.

### TECHNICAL FIELD

This application relates to the field of communication technologies, and in particular, to a dialing test source determining method and apparatus, and a computing device cluster.

### BACKGROUND

A dialing test is a method for verifying whether communication between applications is normal after a network application is deployed. Currently, a dialing test system mainly includes a dialing test task management module and a dialing test source. The dialing test task management module is responsible for receiving a dialing test task defined by a user, managing a life cycle of the dialing test task, and selecting one or more dialing test sources based on configuration specified by the user. For example, the user specifies to select dialing test sources by region (North China or South China) or by terminal type (PC or mobile). The dialing test system herein may have one or more fixed dialing test sources. If there are multiple fixed dialing test sources, the dialing test sources are usually classified by region, device type, carrier, and the like. When configuring a dialing test task, the user needs to specify a dialing test source in the dialing test system as required.

However, in the foregoing solution, one centralized dialing test source or multiple fixed dialing test sources need to be distributed in different regions/network segments, and selection of a dialing test source needs to be manually configured. This increases complexity of dialing test source configuration.

Information disclosed in Background is merely intended to increase an understanding of the overall background of the present invention, and should not be considered as any acknowledgment or any form of implication that the information constitutes a conventional technology well known to persons of ordinary skill in the art.

### SUMMARY

Embodiments of this application provide a dialing test source determining method and apparatus, and a computing device cluster. Only a service on which a dialing test is to be performed needs to be manually configured, and a cloud management platform automatically determines a dialing test source based on a service call relationship, and does not need to configure the dialing test source. This reduces complexity of dialing test source configuration.

According to a first aspect, an embodiment of this application provides a dialing test source determining method, including: providing a configuration interface, where the configuration interface is configured to obtain a dialing test instruction that is set by a user, and the dialing test instruction includes a target service on which a dialing test is to be performed; obtaining, from a database, a set of services that have called the target service, where the database includes a call relationship between multiple services including the target service; and determining a dialing test source based on at least one server corresponding to the set of services that have called the target service, where a server on which a service in the service set is deployed belongs to at least one network segment, and the at least one server also belongs to the at least one network segment.

In this solution, only the service on which the dialing test is to be performed needs to be manually configured, and a cloud management platform automatically determines the dialing test source based on the service call relationship, and does not need to configure the dialing test source. This reduces complexity of dialing test source configuration.

In a possible implementation, the dialing test source is deployed on a server that is in the at least one server and that belongs to the at least one network segment.

In this solution, the network segment of the server on which the service in the service set is deployed is the same as the network segment of the server on which the dialing test source is deployed, so that the dialing test source is deployed in each network segment, to ensure full network segment coverage and comprehensively test a network environment of the server that calls the to-be-tested service.

In a possible implementation, the method further includes: presenting information about the at least one service and/or information about the at least one server to the user.

In a possible implementation, the service in the service set is deployed on the at least one server corresponding to the service set.

In a possible implementation, at least one service selected from the service set is deployed on the at least one server corresponding to the service set.

In a possible implementation, the database further stores a call frequency of the service in the service set; and the at least one selected service includes a service that has a highest call frequency in multiple services that are at least a part of the service set, and a server on which the multiple services that are at least the part of the service set are deployed belongs to any one of the at least one network segment.

In this solution, in a scenario in which there are multiple services in a service set deployed on servers that belongs to one network segment, a higher call frequency of a service indicates that the service is more important, and it is more necessary to test a communication status between the service and the target service, to ensure normal communication. Therefore, a service may be selected, based on a principle of a highest call frequency, from services in service sets deployed on servers in different network segments.

In a possible implementation, the dialing test source is deployed on a server that is in the at least one server and on which the service in the service set is deployed.

In this solution, a server that is the same as a server of an actual business call is selected to deploy the dialing test source. In other words, the dialing test source is deployed on the server on which the service is deployed to ensure a reference value of a dialing test result.

In a possible implementation, the database further stores a function call interface of the target service, and the method further includes: selecting, from the dialing test source, a dialing test source that calls the function call interface; and delivering, based on the function call interface, a dialing test request to the selected dialing test source that calls the function call interface, so that the selected dialing test source that calls the function call interface calls a function of the target service.

In a possible implementation, the method further includes: obtaining trace information of at least a part of the multiple services; determining a call relationship between the multiple services based on the trace information; and storing the call relationship in the database.

According to a second aspect, an embodiment of this application provides a dialing test source determining apparatus. The dialing test source determining apparatus includes several modules, and the modules are configured to perform the steps in the method provided in the first aspect of embodiments of the present invention. Division of the modules is not limited herein. For specific functions performed by the modules of the dialing test source determining apparatus and beneficial effects achieved by the modules, refer to functions of the steps of the method provided in the first aspect of embodiments of the present invention. Details are not described herein again.

For example, the dialing test source determining apparatus includes:
an interface provision module, configured to provide a configuration interface, where the configuration interface is configured to obtain a dialing test instruction that is set by a user, and the dialing test instruction includes a target service on which a dialing test is to be performed;
a service selection module, configured to obtain, from a database, a set of services that have called the target service, where the database includes a call relationship between multiple services including the target service; and
a dialing test source determining module, configured to determine a dialing test source based on at least one server corresponding to the set of services that have called the target service, where a server on which a service in the service set is deployed belongs to at least one network segment, and the at least one server also belongs to the at least one network segment.

In a possible implementation, the dialing test source is deployed on a server that is in the at least one server and that belongs to the at least one network segment.

In a possible implementation, the apparatus further includes:
a presentation module, configured to present information about the at least one service and/or information about the at least one server to the user.

In a possible implementation, the service in the service set is deployed on the at least one server corresponding to the service set.

In a possible implementation, at least one service selected from the service set is deployed on the at least one server corresponding to the service set.

In a possible implementation, the database further stores a call frequency of the service in the service set; and the at least one selected service includes a service that has a highest call frequency in multiple services that are at least a part of the service set, and a server on which the multiple services that are at least the part of the service set are deployed belongs to any one of the at least one network segment.

In a possible implementation, the dialing test source is deployed on a server that is in the at least one server and on which the service in the service set is deployed.

In a possible implementation, the database further stores a function call interface of the target service, and the apparatus further includes: a dialing test module, configured to: select, from the dialing test source, a dialing test source that calls the function call interface; and deliver, based on the function call interface, a dialing test request to the selected dialing test source that calls the function call interface, so that the selected dialing test source that calls the function call interface calls a function of the target service.

In a possible implementation, the apparatus further includes:
a summarization module, configured to: obtain trace log data of at least a part of the multiple servers; determine a call relationship between the multiple services based on the trace information; and store the call relationship in the database.

According to a third aspect, an embodiment of this application provides a dialing test source determining apparatus, including: at least one memory, configured to store a program; and at least one processor, configured to execute the program stored in the memory. When the program stored in the memory is executed, the processor is configured to perform the method provided in the first aspect.

According to a fourth aspect, an embodiment of this application provides a dialing test source determining apparatus. The apparatus runs computer program instructions, to perform the method provided in the first aspect. For example, the apparatus may be a chip or a processor.

In an example, the apparatus may include a processor. The processor may be coupled to a memory, read instructions in the memory, and perform, based on the instructions, the method provided in the first aspect. The memory may be integrated into a chip or a processor, or may be independent of the chip or the processor.

According to a fifth aspect, an embodiment of this application provides a computer storage medium. The computer storage medium stores instructions, and when the instructions are run on a computer, the computer is caused to perform the method provided in the first aspect.

According to a sixth aspect, an embodiment of this application provides a computer program product including instructions. When the instructions are run on a computer, the computer is caused to perform the method provided in the first aspect.

### BRIEF DESCRIPTION OF DRAWINGS

FIG. 1 is a diagram of a system architecture of a dialing test system according to an embodiment of this application;
FIG. 2a is a diagram of calling between multiple services according to an embodiment of this application;
FIG. 2b is a diagram of a call relationship between services according to an embodiment of this application;
FIG. 2c is a diagram of a summarization of call relationships of multiple traces according to an embodiment of this application;
FIG. 3a is a diagram 1 of deploying a service on a server according to an embodiment of this application;
FIG. 3b is a diagram 2 of deploying a service on a server according to an embodiment of this application;
FIG. 3c is a diagram 3 of deploying a service on a server according to an embodiment of this application;
FIG. 4 is a schematic flowchart 1 of a dialing test source determining method according to an embodiment of this application;
FIG. 5 is a diagram of determining a dialing test source according to an embodiment of this application;
FIG. 6a is a schematic flowchart 2 of a dialing test source determining method according to an embodiment of this application;
FIG. 6b is a schematic flowchart 3 of a dialing test source determining method according to an embodiment of this application;
FIG. 7a is a diagram 1 of application of a dialing test source determining method according to an embodiment of this application;
FIG. 7b is a diagram 2 of application of a dialing test source determining method according to an embodiment of this application;
FIG. 8 is a diagram of a structure of a dialing test source determining apparatus according to an embodiment of this application;
FIG. 9 is a diagram of a structure of a computing device according to an embodiment of this application;
FIG. 10 is a diagram of a structure of a computing device cluster according to an embodiment of this application; and
FIG. 11 is a diagram of an example of the computing device cluster according to FIG. 10.

### DESCRIPTION OF EMBODIMENTS

To make objectives, technical solutions, and advantages of embodiments of this application clearer, the following describes the technical solutions in embodiments of this application with reference to accompanying drawings.

In the descriptions of embodiments of this application, words such as "example", "for example", or "in an example" are used to represent giving an example, an illustration, or a description. Any embodiment or design solution described as "example", "for example", or "in an example" in embodiments of this application should not be interpreted as being more preferred or advantageous than another embodiment or design solution. Exactly, use of the words such as "example", "for example", or "in an example" is intended to present a relative concept in a specific manner.

In descriptions of embodiments of this application, the term "and/or" is merely an association relationship for describing associated objects, and indicates that three relationships may exist. For example, A and/or B may indicate: only A exists, only B exists, and both A and B exist. In addition, unless otherwise specified, the term "multiple" means two or more. For example, multiple systems mean at least two systems, and multiple terminals mean at least two terminals.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more features. The terms "include", "contain", "have", and their variants all mean "include but are not limited to", unless otherwise specifically emphasized.

An existing dialing test system mainly includes a dialing test task management module and a dialing test source. Dialing test task management module: responsible for receiving a dialing test task defined by a user, managing a life cycle of the dialing test task, and selecting one or more dialing test sources based on configuration specified by the user. For example, the user specifies to select dialing test sources by region (North China or South China) or by terminal type (PC or mobile). Dialing test source: A dialing test system may have one or more fixed dialing test sources. If there are multiple dialing test sources, the dialing test sources are usually classified by region, device type, carrier, and the like. When configuring a dialing test task, the user needs to specify a dialing test source as required.

However, the foregoing solution mainly has the following problems:
1. A centralized dialing test source or multiple fixed dialing test sources need to be distributed in different regions/network segments to initiate a dialing test request, and selection of a dialing test source needs to be manually configured.
2. Although dialing test sources are deployed in different regions/network segments, a location of the dialing test source is different from a location of an actual calling party of a service on which a dialing test is to be performed. As a result, a dialing test result may be inconsistent with an actual business call result due to different network statuses, security configuration, computing resources, and the like.
3. In addition, the user who configures the dialing test task may not fully understand an actual calling status of the tested service. As a result, some test scenarios may be omitted.

In view of this, embodiments of the present invention provide a dialing test source determining method.

In the method, a dialing test instruction that is set by a user is obtained. The dialing test instruction includes a target service on which a dialing test is to be performed, and instructs to determine a dialing test source of the target service. Therefore, the dialing test instruction does not include the dialing test source of the target service. Then, a set of services that have called the target service are obtained from a database that includes a call relationship between multiple services, to understand a real business scenario of the target service in actual application. Then, the dialing test source is determined based on a server in a network segment of servers on which the services in the service set are deployed, so that the dialing test source is selected in a network environment in which a business is actually applied, to ensure a reference value of a dialing test result.

In conclusion, in embodiments of this application, when the business has been run, the set of services that have called the service on which the dialing test is to be performed are determined based on the call relationship between the services, to learn of the real business scenario. Then, in the server in the network segment of the servers on which the services in the service set are located, a dialing test application in the server may be automatically selected as the dialing test source, so that the dialing test source is selected in the network environment in which the business is actually applied, to ensure a reference value of a result subsequently obtained in the dialing test. This is merely a brief description of the method. For detailed content of the method, refer to the following descriptions of the method.

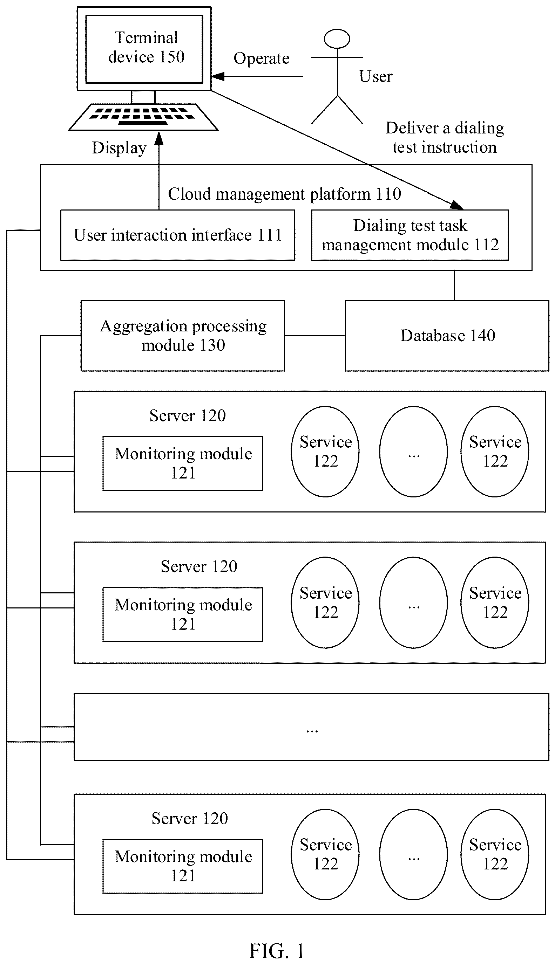

The following describes a dialing test system to which the dialing test source determining method provided in embodiments of the present invention may be applied. FIG. 1 is an example diagram of an architecture of a dialing test system according to an embodiment of the present invention. The dialing test source determining method provided in embodiments of the present invention may be applied to the system architecture shown in FIG. 1. As shown in FIG. 1, the dialing test system includes a cloud management platform 110, M (greater than or equal to 2) servers 120, an aggregation processing module 130, a database 140, and a terminal device 150.

The server 120 may be a hardware server, or may be embedded in a virtualization environment. For example, the server 120 in this solution may be a virtual machine executed on a hardware server including one or more other virtual machines.

A monitoring module 121 and N (greater than or equal to 1) services 122 are deployed on the server 120. The monitoring module 121 is configured to monitor running statuses of various applications deployed on the server 120, including the services 122. It should be noted that a dialing test application is deployed on the monitoring module 121, and therefore, the monitoring module 121 may be used as a dialing test source. In some possible cases, the dialing test application may also be deployed on the services 122. In this case, the services 122 may also be used as dialing test sources. However, there are many developers of the services 122, different developers all need to develop dialing test applications, and the developed dialing test applications are different. Therefore, the dialing test application is usually deployed on the monitoring module 121, and is managed by the cloud management platform 110 in a unified manner. The following uses, for description, an example in which the dialing test source is the monitoring module 121.

In this embodiment of this application, multiple services 122 may be called based on a call relationship to implement a business. The business may be understood as a transaction that needs to be implemented, for example, a purchase business, a payment business, or a recharge business. The service 122 is configured to implement a task in the business. For example, for the purchase business, the multiple services 122 may include tasks such as product management, user management, subscription relationship management, and charging management.

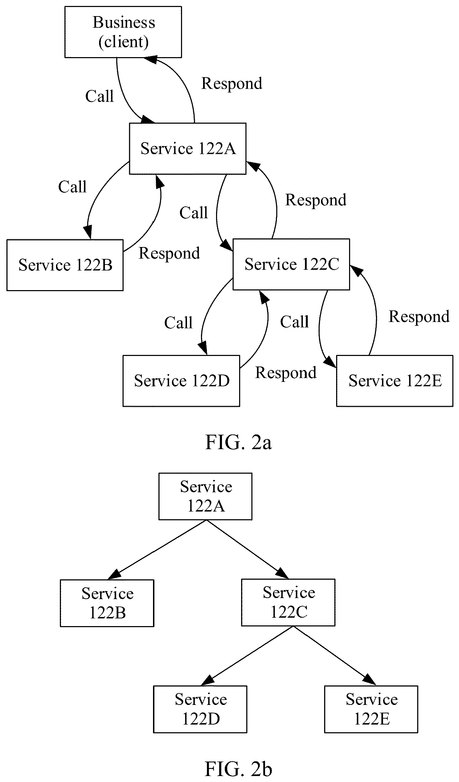

For multiple services 122 that implement a business, each of the services 122 focuses on only one task in the business, and tasks of the multiple services 122 are independent of each other or loosely coupled (that is, not much or little coupling). For example, as shown in FIG. 2a, a business may be implemented by a total of five services 122: a service 122A to a service 122E. Each service 122 in the service 122A to the service 122E focuses on only one task in the business, and tasks of the service 122A to the service 122E are independent of each other.

The call relationship reflects a call sequence of the multiple services 122 in the business. For example, as shown in FIG. 2a, the call relationship may be described as follows: A user sends a business request to the service 122A, and the service 122A executes the business based on the business request and calls the service 122B and the service 122C to provide corresponding services. After providing a corresponding service, the service 122B returns a response to the service 122A. The service 122C calls the service 122D and the service 122E to provide corresponding services. After providing the corresponding services, the service 122D and the service 122E return responses to the service 122C, and then the service 122C returns a response to the service 122A. Then, the service 122A continues to execute the business based on the responses returned by the service 122C and the service 122B. After the business is completed, the service 122A returns a response to the user.

It should be understood that the business, the services 122, and the call relationship are merely examples, and should not constitute a specific limitation.

In this embodiment of this application, the business may be provided by a client. The client processes the business to generate the business request, and the cloud management platform 110 responds to the business request, and calls the multiple services 122 based on the call relationship, to implement the business. Herein, the client may be a terminal device, for example, a mobile phone, a tablet computer, a notebook computer, or a desktop computer. This is not specifically limited herein.

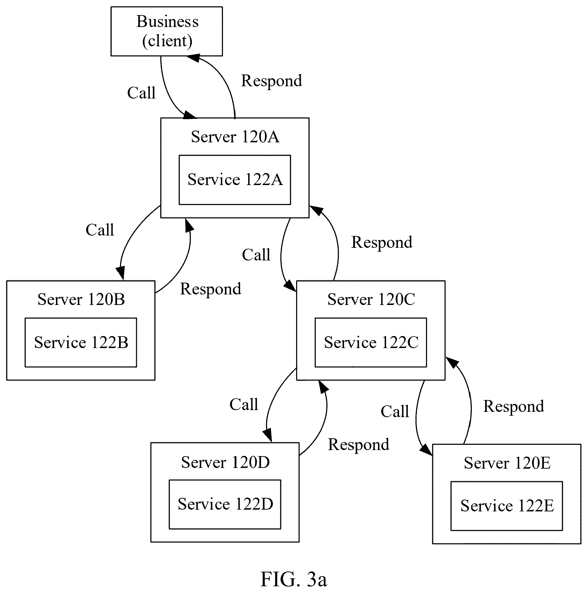

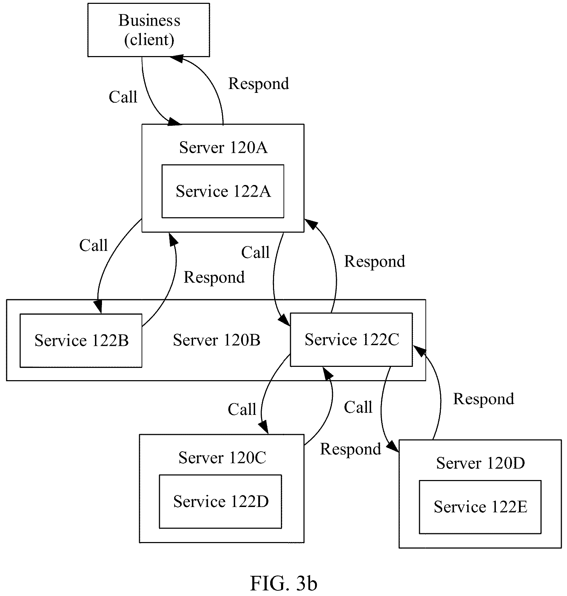

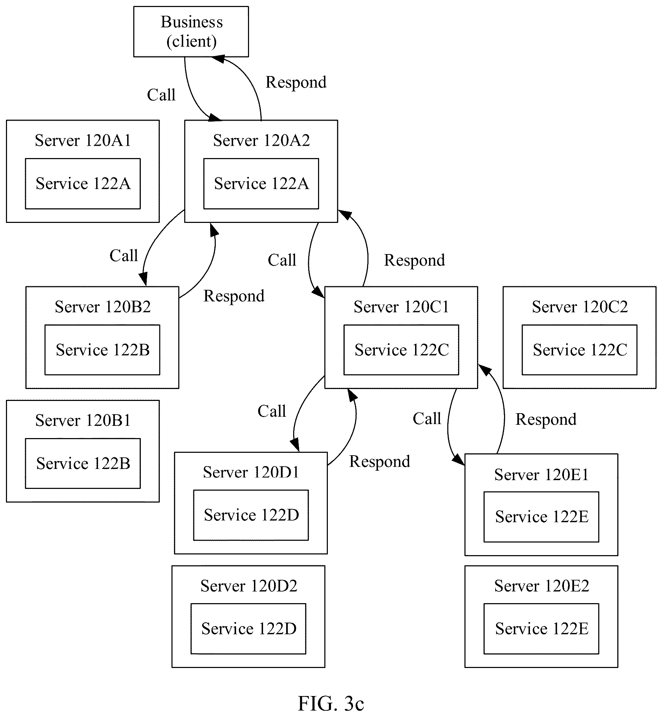

In this embodiment of this application, one service 122 may be deployed on one server 120, or may be deployed on multiple servers 120. In addition, multiple services 122 may be deployed on one server 120. For example, as shown in FIG. 3a, the service 122A is deployed on one server 120A. As shown in FIG. 3b, the service 122B and the service 122C are deployed on one server 120B. As shown in FIG. 3c, the service 122A is deployed on two servers 120: a server 120A1 and a server 120A2.

For example, each service 122 that implements the business may be independently deployed on one server 120. As shown in FIG. 3a, the service 122A is deployed on one server 120A, the service 122B is deployed on one server 120B, the service 122C is deployed on one server 120C, the service 122D is deployed on one server 120D, and the service 122E is deployed on one server 120E.

For example, for the multiple services 122 that implement the business, one service 122 may be deployed on one server 120, and multiple services 122 may be deployed on one server 120. As shown in FIG. 3b, the service 122A is deployed on one server 120A, the service 122B and the service 122C are deployed on one server 120B, the service 122D is deployed on one server 120C, and the service 122E is deployed on one server 120D.

For example, each service 122 that implements the business may be independently deployed on multiple servers 120. Correspondingly, when the service 122 is called, one server 120 may be selected from the multiple servers 120 on which the service 122 is deployed to provide a corresponding service. As shown in FIG. 3c, the service 122A is deployed on the server 120A1 and the server 120A2, the service 122B is deployed on a server 120B1 and a server 120B2, the service 122C is deployed on a server 120C1 and a server 120C2, the service 122D is deployed on a server 120D1 and a server 120D2, and the service 122E is deployed on a server 120E1 and a server 120E2. As shown in FIG. 3c, the client processes the business, generates the business request, and sends the business request to the server 120A2. The server 120A2 calls the service 122A to provide a corresponding service, and calls the service 122B in the server 120B2 and the service 122C in the server 120C1. After providing a corresponding service, the service 122B in the server 120B2 returns a response to the server 120A2. The service 122C in the server 120C1 provides a corresponding service, and calls the service 122D in the server 120D1 and the service 122E in the server 120E1. After providing corresponding services, the service 122D in the server 120D1 and the service 122E in the server 120E1 returns responses to the server 120C1. Then, the server 120C1 returns a response to the server 120A2. The service 122A in the server 120A2 continues to execute the business based on responses returned by the service 122C and the service 122B. After the business is completed, the server 120 A2 returns a response to the user.

In a specific embodiment, the user may submit the business request on a browser on the client. Each service 122 in the business may be independently deployed on one server 120. In some possible implementations, two or more services 122 may alternatively be deployed on a same server 120. This is not specifically limited herein. The server 120 may be a browser server 120, a mail server 120, a web page server 120, a file server 120, or the like. This is not specifically limited herein. In this case, in the M servers 120, corresponding servers 120 are sequentially called based on the call relationship to provide services 122. In this way, the business can be completed.

In a feasible implementation, the call relationship of the services 122 may be represented by a trace. Each service 122 corresponds to one span (span) on the trace, and the call relationship between the multiple services 122 forms the trace. A call relationship between the service 122A and the service 122B in FIG. 2a may correspond to an arrow line between the service 122A and the service 122B in a trace in FIG. 2b, indicating that the service 122A calls the service 122B. A call relationship between the service 122A and the service 122C in FIG. 2a may correspond to an arrow line between the service 122A and the service 122C in the trace in FIG. 2b, indicating that the service 122A calls the service 122C. A call relationship between the service 122C and the service 122D in FIG. 2a may correspond to an arrow line between the service 122C and the service 122D in the trace in FIG. 2b, indicating that the service 122C calls the service 122D. A call relationship between the service 122C and the service 122E in FIG. 2a may correspond to an arrow line between the service 122C and the service 122E in the trace in FIG. 2b, indicating that the service 122C calls the service 122E.

It should be understood that the trace is merely used as an example of the call relationship, and the call relationship may alternatively be represented by a call relationship tree, a call relationship diagram, or the like. This should not constitute a specific limitation herein. For ease of description, the following uses, for description, an example in which a trace represents a call relationship.

The server 120 generates trace information of the deployed service 122, and the trace information is used to record a trace parameter and an event parameter. The trace information may be carried in a trace log, or may be carried in a packet. This is not specifically limited herein.

Specifically, the trace parameter includes but is not limited to parameters such as a trace identifier (TraceID), a service identifier (Span ID), and a parent service identifier (Parent ID). The trace identifier is a unique identifier of the trace, the service identifier is a unique identifier of the service 122, and the parent service identifier is an identifier of a previous service 122 that calls the service 122. The parameter of the trace field is merely used as an example. In another implementation, the trace field may also include another parameter. For example, the trace parameter may further include a service identifier (Span ID) indicating a next service 122 called by the current service 122.

In this embodiment of this application, in the entire trace of the business request, the business request is sent to a service 122 used as a trace entry. The service 122 generates traceID and an interface request of a to-be-called downstream service 122. The interface request always carries traceid and is transferred to the downstream service 122. After the interface request arrives at the downstream service 122, the downstream service 122 is used as a current service 122 to generate spanid for the interface request, and spanid of the upstream service 122 transferred from the upstream along with the interface request is recorded as Parent ID. In addition, an interface request of a to-be-called downstream service 122 is generated. Herein, spanid generated by the current service 122 and traceID transferred from the upstream are transferred to a downstream service together with the interface request. The transferred spanid is recorded by the downstream service 122 as Parent ID. Herein, traceid remains unchanged in the entire trace of the request. Therefore, trace information of all services 122 during the entire business request may be queried in the trace information by using traceid. It should be noted that if a span without parentId becomes a root span, the span is a trace entry, and may generate traceID and transfer traceID downward.

It should be noted that the service 122 may implement multiple functions, and each function corresponds to one function call interface. In actual application, a function call interface may be called by using an interface request, to call the service 122 to implement a function. Therefore, the interface request in the event parameter is used to call a function in the service 122.

Correspondingly, a trace view of the business request can be completely restored based on traceid, spanid, and pspanid that are recorded in the trace information, to obtain the trace shown in FIG. 2b. Specifically, traces may be integrated based on trace id, and spanid and parentId corresponding to same trace id are integrated, to finally obtain a call relationship between different services 122.

For example, as shown in FIG. 2a, the service 122A is a trace entry, a trace field includes TraceID being TraceID-1, SpanID of the current service 122A is SpanID-1, and ParentID is none. A trace field of the service 122B includes TraceID being TraceID-1, SpanID of the current service 122B is SpanID-2, and ParentID is SpanID-1 of the service 122A. A trace field of the service 122C includes TraceID being TraceID-1, SpanID of the service 122C is SpanID-3, and ParentID is SpanID-1 of the service 122A. A trace field of the service 122D includes TracelD being TraceID-1, SpanID of the current service 122D is SpanID-4, and ParentID is SpanID-3 of the service 122C. A trace field of the service 122E includes TraceID being TraceID-1, SpanID of the current service 122E is SpanID-5, and ParentID is SpanID-3 of the service 122C.

The event parameter mainly includes an annotation (annotation) parameter and an additional annotation (binarAnnotation) parameter. In addition, the annotation parameter is used to record a called service 122 and time information, and may include Timestamp (indicating a local current system time when an event occurs), a name (Servicename) of the called service 122, an IP address of the called service 122, a port number of the called service 122, an interface request of the called service 122, and data content requested by using the interface request. Herein, if the call is an RPC (Remote Producer Call, remote producer call), the interface request is an interface name or a URL (uniform resource locator, uniform resource locator). If the call is a local call, the interface request is a function name. The binarAnnotation parameter is used to provide information such as resultcode (error code) and resultDesc (description) when interface execution fails, to facilitate fault locating. For example, resultcode is 0100001, and resultDesc indicates an interface call failure; or resultcode is 0100002, and resultDesc indicates that the parameter is invalid. It should be understood that the event parameter may alternatively include less or more content. This is not specifically limited herein.

The aggregation processing module 130 is configured to aggregate trace information reported by the M servers 120, to obtain a call relationship between multiple services 122, for example, the N services, and a communication address of the server 120 used by each service 122, and store the communication address in the database 140. For ease of description, it may be considered that there is a call relationship between the N services 122. The following uses the call relationship between the N services 122 as an example to describe the technical solutions provided in embodiments of this application. In an example, the communication address of the server 120 may include addresses of the monitoring module 121 and the service 122. For example, an address (referred to as addressA for ease of description and differentiation) of the monitoring module 121 may be an IP address and a port number, or may be a module name of the monitoring module 121. Herein, the IP address of the monitoring module is an IP address of the server 120 in which the monitoring module is located. For example, an address (referred to as addressB for ease of description and differentiation) of the service 122 may be an IP address and a port number, or may be a service name of the service 122. The IP address of the service 122 is usually the same as the IP address of the server 120 on which the service 122 is deployed. In addition, if the service 122 is deployed in a container, the IP address is an IP address of the container, and is different from the IP address of the server 120. The port number is used to differentiate between different applications, for example, differentiate between the monitoring module 121 and the service 122. It should be understood that one server 120 may run multiple services 122, and the multiple services 122 use a same IP address of the server 120 but different port numbers. In this way, different services 122 can be called by using different port numbers.

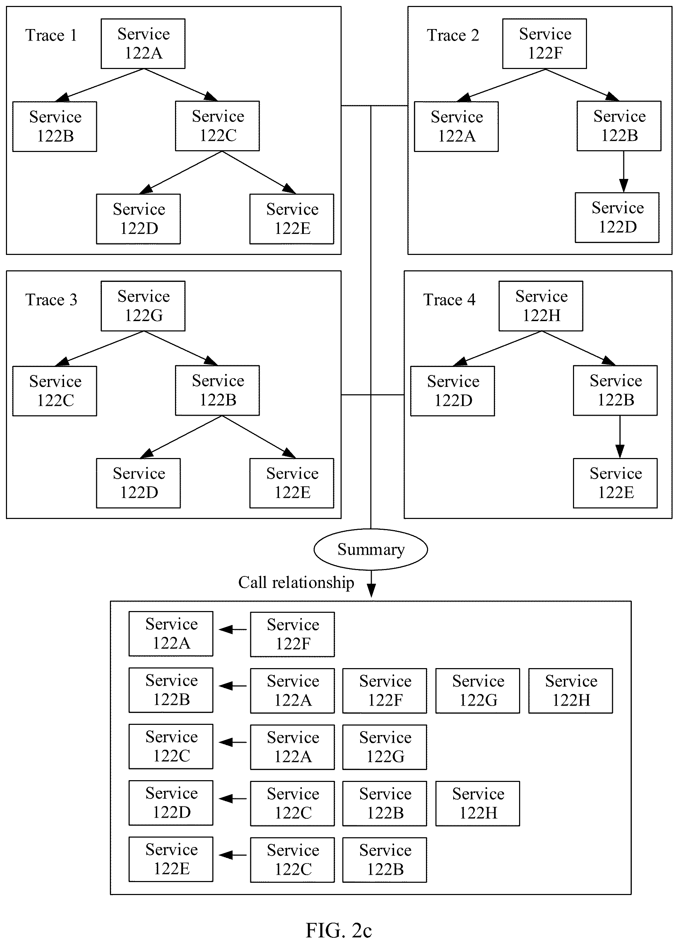

It should be noted that, in actual application, the N services 122 may provide multiple businesses, to form multiple traces. In this case, a call relationship between the multiple services 122 may be understood as a call relationship obtained by integrating the traces of the multiple businesses. For example, as shown in FIG. 2c, it is assumed that there are four traces: A trace 1 is the service 122A→the service 122B+the service 122C, and the service 122C→the service 122D+the service 122E; a trace 2 is a service 122F→the service 122A+the service 122B, and the service 122B→the service 122D; a trace 3 is a service 122G→the service 122C+the service 122B, and the service 122B→the service 122D+the service 122E; and a trace 4 is a service 122H→the service 122D+the service 122B, and the service 122B→the service 122E. After the four traces are summarized, the following call relationship may be obtained: the service 122F→the service 122A, the service 122A+the service 122F+the service 122G+the service 122H→the service 122B, the service 122A+service 122G→the service 122C, the service 122C+the service 122B+the service 122H→the service 122D, and the service 122C+the service 122B→the service 122D.

Further, the M servers 120 report, to the aggregation processing module 130, call statuses of the services 122 deployed on the M servers 120. Herein, the call status indicates a call time period and a call quantity of the call time period. Then, the aggregation processing module 130 may collect statistics on a call time period and a call quantity of a same service 122 based on the call statuses that are reported by the M servers 120 and that are of the services 122 deployed on the M servers 120, to obtain respective call frequencies of the multiple services 122, and store the information about the multiple services in the database 140.

There may be one or more databases 140, and any one or more of a graph database, a relational database, and a non-relational database may be included. A quantity and types of databases are not specifically limited in embodiments of this application, and may be specifically flexibly designed with reference to an actual situation.

In a feasible implementation, the service 122 in the trace is used as a node, a connection line with an arrow between the services 122 is used as a directional edge, and an arrow of the edge indicates a called service 122, to construct a directed graph. Herein, the directed graph may indicate a call relationship between services 122 in one trace, or may indicate a call relationship between services 122 that is obtained by summarizing multiple traces. For detailed content, refer to FIG. 2c and the foregoing descriptions of FIG. 2c. Correspondingly, the database 140 includes a graph database, and the graph database is used to store the directed graph.

In a feasible implementation, call relationships between services in all traces that can be monitored may be summarized. For detailed content, refer to FIG. 2c and the foregoing descriptions of FIG. 2c. Then, for each service 122, a list of services 122 called by the service 122 (which may be referred to as a list LA for ease of description and differentiation) or a list of services 122 that call the service 122 (which may be referred to as a list LB for ease of description and differentiation) may be obtained. Optionally, the list LA or the list LB corresponding to the service 122 may be stored as a directed graph. For example, for the list LA corresponding to the service 122, the service 122 that is in the list LA and the service 122 are used as nodes, the service 122 that is in the list LA and the service 122 are connected by using an edge with an arrow, and the arrow points to the service 122 in the list LA. In this way, a directed graph is obtained. The list LB corresponding to the service 122 is similar, and a difference merely lies in that an arrow points to the service 122 corresponding to the list LB. Correspondingly, the database 140 includes a graph database, and the graph database is used to store the directed graph. Optionally, the list LA or the list LB corresponding to the service 122 may be stored as a data table. Correspondingly, the database 140 includes a relational database, and the relational database is used to store the data table. Optionally, the list LA or the list LB corresponding to the service 122 may be stored in a key (key)-value (value) manner, where a key may be the service 122, and a value may be the list LA or the list LB corresponding to the service 122. Correspondingly, the database 140 includes a non-relational database, and the non-relational database is used to store data based on a key-value data structure.

The cloud management platform 110 may include a user interaction interface 111 and a dialing test task management module 112. Herein, the cloud management platform 110 may provide a configuration interface, and the configuration interface is configured to obtain an operation instruction used for the user interaction interface 111. In this embodiment of this application, the N services in the database 140 may be displayed on the user interaction interface 111. The user may select a service (referred to as a target service for ease of description and differentiation) from the N services, and determine an operation instruction for the service. For example, the operation instruction is a dialing test instruction, and instructs to select a dialing test source for the target service on which a dialing test is to be performed. Correspondingly, the dialing test task management module 112 may perform, based on the dialing test instruction, the dialing test source determining method provided in embodiments of this application, to automatically select the dialing test source for the target service.

The terminal device 150 may be but is not limited to a personal computer, a notebook computer, a smartphone, a tablet computer, and a portable wearable device. An example embodiment of the terminal device in this solution includes but is not limited to an electronic device that carries iOS, Android, Windows, Harmony OS (Harmony OS), or another operating system. A type of the electronic device is not specifically limited in embodiments of the present invention. In this embodiment of this application, the terminal device 150 is configured to access the cloud management platform 110. For example, the user may install a client on the terminal device 150, or install a browser, and enter a website address in the browser to access the cloud management platform 110. Then, the terminal device 150 may obtain and display the user interaction interface 111 through the configuration interface, and the user performs an operation on the user interaction interface 111 through the terminal device 150.

Next, with reference to the dialing test system provided above, a dialing test source determining method provided in embodiments of the present invention is described in detail.

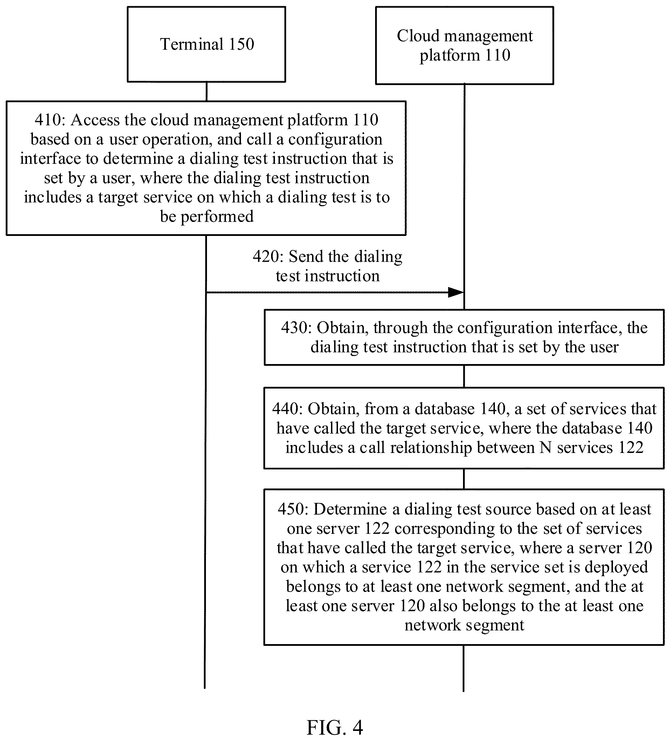

FIG. 4 is a schematic flowchart of the dialing test source determining method according to an embodiment of this application. This embodiment may be applied to a cloud management platform, for example, may be applied to the cloud management platform 110 described above. The cloud management platform is connected to multiple servers and a database, for example, the M servers 120 and the database 140 described above. The database stores a call relationship between multiple services run on the multiple servers. For example, the database 140 stores a call relationship between N services run on the M servers 120. The following describes in detail the dialing test source determining method provided in this embodiment of this application by using, as examples, the cloud management platform 110, the database 140, the M servers 120, and the database 140 storing the call relationship between the N services.

As shown in FIG. 4, the dialing test source determining method provided in this embodiment of this application includes at least the following steps.

Step 410: The terminal device 150 accesses the cloud management platform 110 based on a user operation, and calls a configuration interface to determine a dialing test instruction that is set by a user, where the dialing test instruction includes a target service on which a dialing test is to be performed.

In this embodiment of this application, the configuration interface may obtain the user interaction interface 111 and an operation instruction of the user for the user interaction interface 111, for example, the dialing test instruction. In this embodiment of this application, the dialing test instruction is generated based on an operation of selecting the target service by the user. Because a dialing test source of the target service is unknown, the dialing test instruction does not indicate the dialing test source of the target service. In other words, the dialing test instruction does not include information about the dialing test source of the target service, where the information about the dialing test source is used to describe the dialing test source. In other words, the dialing test instruction instructs to select the dialing test source for the target service on which the dialing test is to be performed. For example, the information about the dialing test source may include a region in which the dialing test source is located, a carrier, and the like. For example, the information about the dialing test source may include a communication address of a server in which the dialing test source is located, for example, an IP address and a port number of a dialing test application (for example, the monitoring module 121).

In a feasible case, the user may install a client of the cloud management platform 110 on the terminal device 150, and then tap an icon of the client, or install a browser, and enter a website address in the browser, to access the cloud management platform 110. Then, the terminal device may obtain the user interaction interface 111 through the configuration interface and display the user interaction interface. Herein, the N services 122 are displayed on the user interaction interface 111. Then, the user selects, through the terminal device, a service 122 displayed on the user interaction interface 111, and the selected service 122 is used as the target service 122. Then, the user continues to perform an operation, and determines to perform an operation on the selected service 122, for example, determines to perform a dialing test. In this case, the terminal device 150 may generate the dialing test instruction, and sends the dialing test instruction to the cloud management platform 110.

Step 420: The terminal device 150 sends the dialing test instruction to the cloud management platform 110.

Step 430: The cloud management platform 110 obtains, through the configuration interface, the dialing test instruction that is set by the user.

Step 440: The cloud management platform 110 obtains, from the database 140, a set of services that have called the target service, where the database 140 includes the call relationship between the N services 122.

Herein, for an understanding of the call relationship and how the database 140 stores the call relationship between the N services 122, refer to the foregoing descriptions.

It should be understood that the service set (which may be referred to as a service set SS for ease of description and differentiation) may be understood as a set of all services 122 that are in the N services 122 and that call the target service 122. For example, the service set may be the foregoing list LB corresponding to the service 122.

Step 450: The cloud management platform 110 determines the dialing test source based on at least one server 120 corresponding to the set of services that have called the target service, where a server 120 on which the service 122 in the service set is deployed belongs to at least one network segment, and the at least one server 120 also belongs to at least one network segment.

In this embodiment of this application, it is assumed that servers 120 on which the services 122 in the service set SS are located all belong to at least one network segment, for example, Q (greater than or equal to 1) network segments. The following uses the Q network segments as an example for description. The network segment may be understood as a partial IP address range in which communication can be directly performed by using a same physical layer device (a transmission medium, a repeater, a hub, or the like). Specifically, a network segment of the server 120 may be determined based on an IP address of the server 120. For example, an IP address of the server 120A is 192.168.3.2, and an address of a network segment corresponding to the server 120A is 192.168.3.0. Therefore, the network segment to which the server 120A belongs is 192.168.3.0.

For ease of description and differentiation, a set of servers that are in the M servers 120 and that belong to the Q network segments is referred to as a server set SC. In other words, the server set SC is a set of servers that are in the M servers 120 and that belong to the same network segment as the server 120 on which the service 122 in the service set SS is located.

In a possible case, the multiple servers 120 in the server set SC may belong to a same network segment. For example, if an IP address of the server 120A is 192.168.3.2, and an IP address of the server 120B is 192.168.3.10, addresses of network segments corresponding to the server 120A and the server 120B both are 192.168.3.0. Therefore, the server 120A and the server 120B belong to a same network segment.

There may be one or more dialing test sources. It is assumed that there are W dialing test sources. The following uses W dialing test sources as an example for description.

The dialing test source is deployed on a server that belongs to the Q network segments. In an example, a dialing test application used for a dialing test in the server 120 is used as the dialing test source. For example, the monitoring module 121 may be used as the dialing test source. The following uses, for description, an example in which the monitoring module 121 is used as the dialing test source.

In a possible case, for each of the Q network segments, a monitoring module 122 in any one or more servers 120 that belong to the network segment is used as the dialing test source. In other words, there may be one or more dialing test sources. This is not specifically limited in embodiments of this application, and may be specifically set with reference to an actual requirement.

Herein, that the dialing test source is deployed on the server that belongs to the Q network segments is merely used as an example, and does not constitute a specific limitation. In some possible cases, the dialing test source may be deployed on servers that belong to some of the Q network segments. In actual application, all network segments usually need to be covered. Therefore, the following uses, for description, an example in which the dialing test source is deployed on the server that belongs to the Q network segments.

In a feasible implementation, the network segment of the at least one server 120 corresponding to the service set SS is the Q network segments, which are the same as the Q network segments of the servers on which the services 122 in the service set SS are deployed, namely, the server set SC.

In a possible case, for any one of the Q network segments, the dialing test source is deployed on a server 120 that belongs to the network segment and on which the service 122 in the service set SS is deployed, or the dialing test source is deployed on a server 120 that belongs to the network segment and on which the service 122 in the service set SS is not deployed.

For example, in some embodiments, all services 122 in the service set SS are deployed on servers 120 on which the W dialing test sources are deployed.

For example, in some embodiments, at least some services 122 in the service set SS are deployed on servers 120 on which the W dialing test sources are deployed.

For example, in some embodiments, no service 122 in the service set SS is deployed on servers 120 on which the W dialing test sources are deployed.

Optionally, for any one of the Q network segments, one or more servers 120 are randomly selected from servers 120 that belong to the network segment, and a monitoring module 121 in the selected server 120 is used as the dialing test source.

Optionally, for any one of the Q network segments, if at least one service 122 in the service set SS is deployed on a server 120 that belongs to the network segment, subsequently, one service 122 is selected from the at least one service 122, and a monitoring module 121 in the server 120 on which the selected service 122 is deployed is used as the dialing test source.

In an example, if one service 122 in the service set SS is deployed on the server 120 that belongs to the network segment, the service 122 is selected, that is, the service 122 is the selected service 122.

In an example, if multiple services 122 in the service set SS are deployed on the server 120 that belongs to the network segment, at least one service 122 is selected from the multiple services 122. For example, the server 122 may be specifically selected in the following two implementations:
implementation A1: randomly select a service 122; and
implementation A2: select a service 122 that has a highest call frequency.

In the implementation A2, the database 140 stores respective call frequencies of the N services 122.

For example, Q=1. To be specific, the server 120 on which the service 122 in the service set SS is deployed belongs to one network segment, that is, all the servers 120 in the server set SC belong to one network segment. In this case, if the service set SS includes multiple services 122, one service 122 may be randomly selected from the service set SS, or one service 122 with a highest call frequency may be selected.

For example, Q is greater than or equal to 2. To be specific, the server 120 on which the service 122 in the service set SS is deployed belongs to multiple network segments. In this case, for each network segment, if one service 122 in the service set SS is deployed on a server 120 that belongs to the network segment, the service 122 may be directly selected. Alternatively, if multiple services 122 in the service set SS are deployed on the server 120 that belongs to the network segment, one service 122 may be randomly selected from the multiple services 122, or one service 122 that has a highest call frequency is selected.

It should be noted that, for a service 122 in the service set SS, the service 122 may be deployed on one server 120, or may be deployed on multiple servers 120. If the service 122 is deployed on one server 120, when the service 122 is the selected service 122, a monitoring module 121 in the server 120 is used as the dialing test source. If the service 122 is deployed on multiple servers 120, when the service 122 is the selected service 122, monitoring modules 121 in at least some servers 120 may be separately selected from the multiple servers 120 as dialing test sources. Because the multiple servers 120 on which the service 122 is deployed usually belong to a same network segment and have a same network environment, a monitoring module 121 in one server 120 may be randomly selected as a dialing test source.

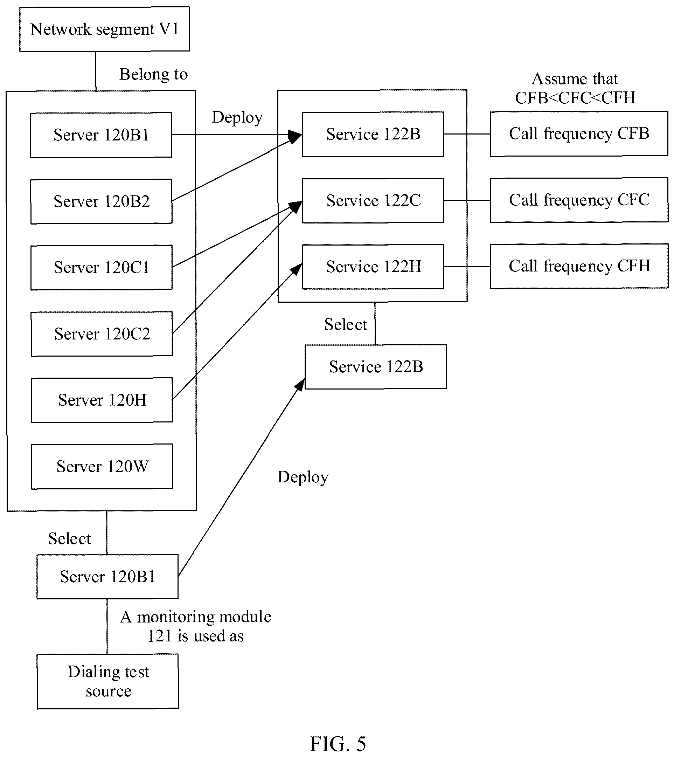

For example, as shown in FIG. 5, it is assumed that the Q network segments include a network segment V1, and servers 120 that belong to the network segment V1 include a server 120B1 and a server 120B2 in which a service 122B is deployed, a server 120C1 on which a service 122C is deployed, a server 120C2 on which the service 122C is deployed, a server 120H on which a service 122H is deployed, and a server 120W. In other words, the servers 120 on which the service 122B, the service 122C, and the service 122H are deployed belong to the same network segment V1, and call frequencies of the service 122B, the service 122C, and the service 122H are CFB, CFC, and CFH. It is assumed that CFB<CFC<CFH.

In a possible case, as shown in FIG. 5, it is assumed that a service 122 is randomly selected from the service 122B, the service 122C, and the service 122H, and it is assumed that the service 122B is selected. Optionally, a server 120 may be randomly selected from the server 120B1 and the server 120B2 on which the service 122B is deployed, and a monitoring module 121 in the selected server 120 is used as the dialing test source. As shown in FIG. 5, it is assumed that the server 120B1 is selected, and a monitoring module 121 in the server 120B1 is used as the dialing test source. Optionally, a server 120 may be randomly selected from the server 120C1, the server 120C2, the server 120H, and the server 120W on which no service 122B is deployed, and a monitoring module 121 in the selected server 120 is used as the dialing test source.

In a possible case, it is assumed that the service 122H that has a highest call frequency is selected from the service 122B, the service 122C, and the service 122H. Optionally, a monitoring module 121 in the server 120H on which the service 122H is deployed may be used as the dialing test source. Optionally, a server 120 may be randomly selected from the server 120B1, the server 120B2, the server 120C1, the server 120C2, and the server 120W on which no service 122H is deployed, and a monitoring module 121 in the selected server 120 is used as the dialing test source.

In a feasible implementation, the service 122 in the service set SS is deployed on the at least one server corresponding to the service set SS.

For example, the at least one server corresponding to the service set SS includes a server 120 that is in the server set SC and on which the service 122 in the service set SS is deployed.

Optionally, the dialing test source is deployed on the server 120 on which the service 122 in the service set SS is deployed.

For any one of the Q network segments, the dialing test source is deployed on a server 120 that belongs to the network segment and on which the service 122 in the server set SS is deployed.

Specifically, for any one of the Q network segments, if one service 122 in the service set SS is deployed on the server 120 that belongs to the network segment, the monitoring module 121 in the server 120 on which the service 122 is deployed is used as the dialing test source. If multiple services 122 in the service set SS are deployed on the server 120 that belongs to the network segment, one service 122 is selected from the multiple services 122, and a monitoring module 121 in the server 120 on which the selected service 122 is deployed is used as the dialing test source. For details, refer to the foregoing descriptions. Details are not described again.

In a feasible implementation, the service 122 selected from the service set SS is deployed on the at least one server corresponding to the service set SS. Optionally, the dialing test source is deployed on the server 120 on which the service 122 in the service set SS is deployed.

For example, the at least one server corresponding to the service set SS includes the server 120 that is in the server set SC and on which the service 122 selected from the service set SS is deployed.

Specifically, in step 450, at least one service 122 may be selected from the service set SS, and the W dialing test sources are determined based on at least one server 120 on which the at least one selected service 122 is deployed.

Optionally, the dialing test source is deployed on the server 120 on which the selected service 122 in the service set SS is deployed.

For any one of the Q network segments, the dialing test source is deployed on a server 120 that belongs to the network segment and on which the service 122 selected from the server set SS is deployed.

Specifically, for any one of the Q network segments, if one service 122 selected from the service set SS is deployed on the server 120 that belongs to the network segment, the monitoring module 121 in the server 120 on which the service 122 is deployed is used as the dialing test source. If multiple services 122 selected from the service set SS are deployed on the server 120 that belongs to the network segment, one service 122 is selected from the multiple services 122, and a monitoring module 121 in the server 120 on which the selected service 122 is deployed is used as the dialing test source. For details, refer to the foregoing descriptions. Details are not described again.

In some possible implementations, step 430 and step 450 may be implemented by the dialing test task management module 12.

In this solution, first, only the service on which the dialing test is to be performed needs to be manually configured, and the cloud management platform automatically determines the dialing test source based on the service call relationship, and does not need to configure the dialing test source. This reduces complexity of dialing test source configuration. Based on the service call relationship, an actual situation of the tested service can be fully understood, to ensure that no test scenario is omitted.

Second, the network segment of the server on which the service in the service set is deployed is the same as the network segment of the server on which the dialing test source is deployed, so that the dialing test source is deployed in each network segment, to ensure full network segment coverage and comprehensively test a network environment of the server that calls the to-be-tested service.

Third, the dialing test source is deployed on the server on which the service in the service set is deployed, so that the dialing test can be implemented in a real service scenario, to ensure a reference value of a dialing test result subsequently obtained in the dialing test.

Fourth, the server on which the service that has the highest call frequency in the multiple services in the service set is located is selected to deploy the dialing test source, to ensure that the dialing test is performed on an important service.

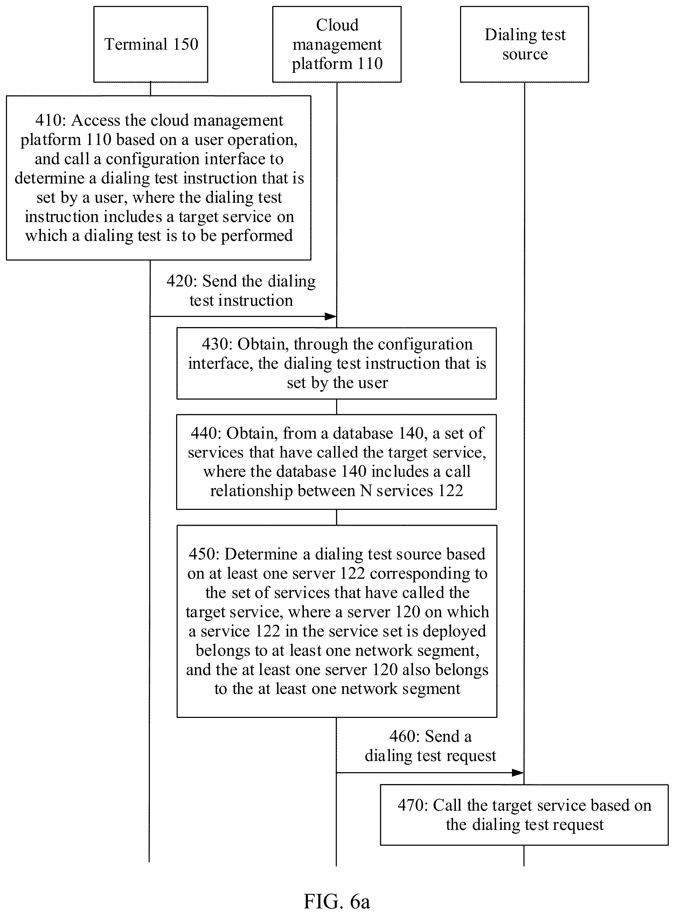

FIG. 6a is a schematic flowchart of another dialing test source determining method according to an embodiment of this application.

As shown in FIG. 6a, based on step 410 to step 450 shown in FIG. 4, at least the following steps are further included.

Step 460: The cloud management platform 110 sends a dialing test request to the dialing test source.

The W dialing test sources described above are still used as an example for description. After determining the W dialing test sources, the cloud management platform 110 may call the target service 122 by using the W dialing test sources.

In a specific implementation, for the target service 122, the target service 122 has A function call interfaces. For example, the function call interface may be an API (Application Programming Interface, application programming interface). When the dialing test is performed on the target service 122, verification needs to be performed on each of the A function call interfaces. In this case, step 460 may be specifically implemented in the following manner.

For each of the A function call interfaces, a dialing test source corresponding to the function call interface is determined from the W dialing test sources; and a dialing test request corresponding to the function call interface is determined based on the function call interface and a communication address of the corresponding dialing test source, and the dialing test request is delivered to the dialing test source corresponding to the function call interface, so that the dialing test source calls a function of the target service 122 based on the dialing test request, to implement the dialing test.

For example, the dialing test source is the monitoring module 121, and the dialing test request includes a communication address addressA of the monitoring module 121 and a communication address addressB of the target service 122. For example, addressA includes an IP address of a server in which the monitoring module 121 is located and a port number of the monitoring module 121 or a module name of the monitoring module 121, and addressB may be the function call interface and a service name, or the function call interface, an IP address of a server 120 in which the target service 122 is located, and a port number of the target service 122.

Optionally, the A function call interfaces may be allocated to the W dialing test sources in a polling manner, to obtain the dialing test sources respectively corresponding to the A function call interfaces, so as to ensure that the A function call interfaces used by the target service 122 can be fully covered.

For example, it is assumed that there are three dialing test sources A, B, and C, and there are five function call interfaces S1, S2, S3, S4, and S5. The dialing test sources are allocated to S1, S2, S3, S4, and S5 in a manner of polling A, B, and C. Specifically, A is allocated to S1, B is allocated to S2, and C is allocated to S3. If there are remaining function call interfaces, A is allocated to S4, and B is allocated to S5. In this case, final allocation of the dialing test sources is as follows: A: [S1, S4], B: [S2, S5], and C: [S3].

Step 470: The dialing test source calls the target service based on the dialing test request.

It should be noted that the dialing test source calls the target service based on the function call interface in the dialing test request.

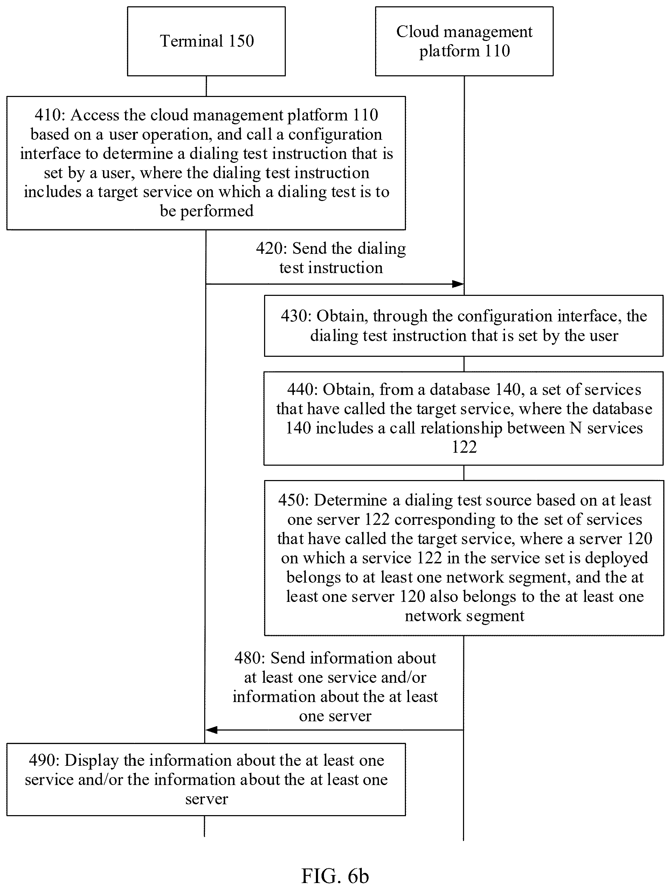

FIG. 6b is a schematic flowchart of another dialing test source determining method according to an embodiment of this application.

As shown in FIG. 6b, based on step 410 to step 450 shown in FIG. 4, at least the following steps are further included.

Step 480: The cloud management platform 110 sends information about the at least one service and/or information about the at least one server to the terminal device 150.

Herein, the information about the service may be a name of the service. The information about the server may be a region, a carrier, a communication address, and the like of the server.

Step 490: The terminal device 150 displays the information about the at least one service and/or the information about the at least one server.

Based on the dialing test source determining method and the dialing test system that are provided above, specific application of the dialing test source determining method is described.

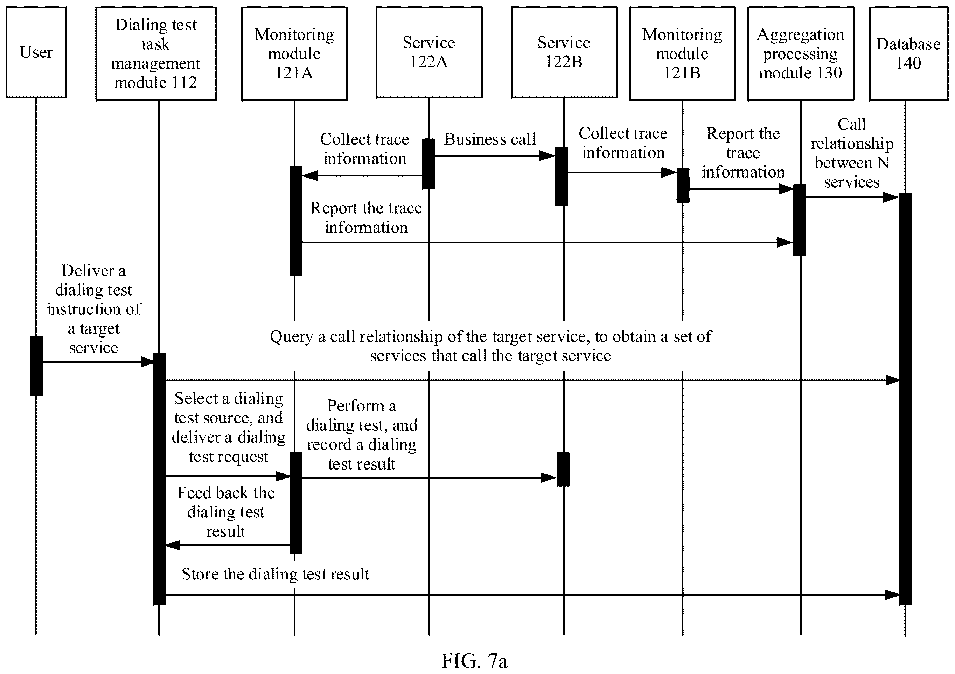

As shown in FIG. 7a, in a business running process, a service 122A performs a business call on a service 122B. A monitoring module 121A of the service 122A and a monitoring module 121B of a service 122B collect trace information, and report the trace information to an aggregation processing module 130, and the aggregation processing module 130 performs summarization and integration to obtain a call relationship between N services, and stores the call relationship in a database 140.

As shown in FIG. 7a, in a dialing test task execution process, a user delivers a dialing test instruction of a target service (assumed to be the service 122B) to a dialing test task management module 112. The dialing test task management module 112 queries the database 140 for a call relationship of the target service, to obtain a set of services that call the target service (assumed to be the service 122B). Then, the dialing test task management module 112 automatically selects a dialing test source (assumed to be the monitoring module 121A), and delivers a dialing test request to the dialing test source (assumed to be the monitoring module 121A). The dialing test source (assumed to be the monitoring module 121A) performs a dialing test, and calls the target service (assumed to be the service 122B). A dialing test result is recorded, and the dialing test result is fed back to the dialing test task management module 112. The dialing test task management module 112 stores the dialing test result in the database 140.

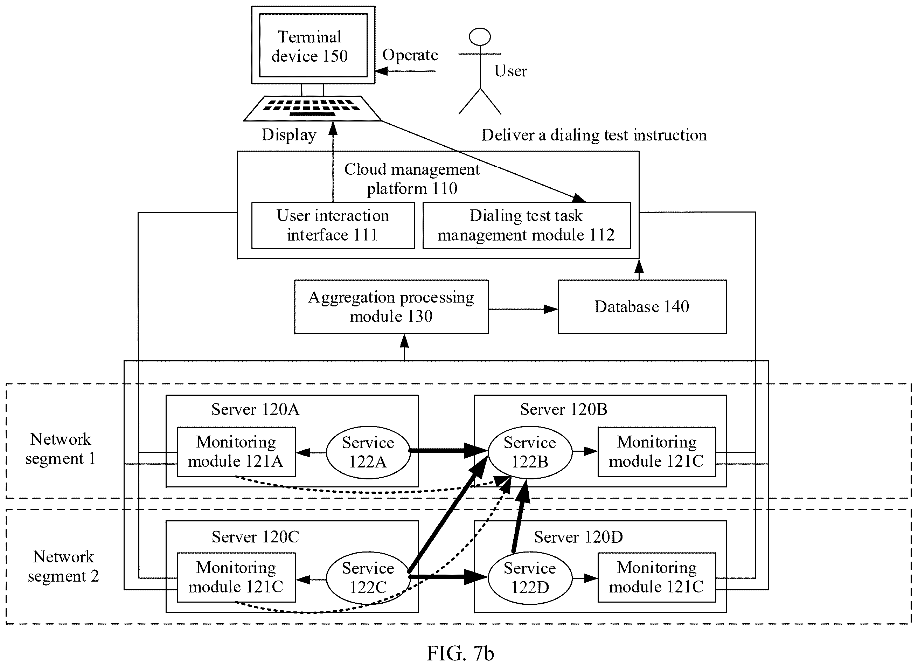

As shown in FIG. 7b, a service 122A and a monitoring module 121A are deployed on a server 120A, and the monitoring module 121A collects trace information of the service 122A; a service 122B and a monitoring module 121B are deployed on a server 120B, and the monitoring module 121B collects trace information of the service 122B; a service 122C and a monitoring module 121C are deployed on the server 120C, and the monitoring module 121C collects trace information of the service 122C; and a service 122D and a monitoring module 121D are deployed on the server 120D, and the monitoring module 121D collects trace information of the service 122D. The service 122A and the service 122C call the service 122B, the service 122C calls the service 122D, the server 120A and the server 120B belong to a network segment 1, and the server 120C and the server 120D belong to a network segment 2.

After receiving a dialing test instruction for the service 122B, a dialing test task management module 112 determines a service set for calling the service 122B. The service set includes the service 122A, the service 122C, and the service 122D. The server 120A, the server 120C, and the server 120D on which the service 122A, the service 122C, and the service 122D are deployed belong to the network segment 1 and the network segment 2. For the network segment 1, the dialing test task management module 112 uses the monitoring module 121A in the server 120A that belongs to the network segment 1 as a dialing test source. For the network segment 2, the server 120C is randomly selected from the server 120C and the server 120D that belong to the network segment 2, and the monitoring module 121C in the server 120C is used as a dialing test source. Alternatively, a call frequency of the service 122C is higher than that of the service 122D, and the monitoring module 121C in the server 120C in which the service 122C that has the higher call frequency is located is selected as a dialing test source. Then, the dialing test task management module 112 delivers a dialing test request to the two dialing test sources: the monitoring module 121A and the monitoring module 121C, and the monitoring module 121A and the monitoring module 121C call the service 122B.

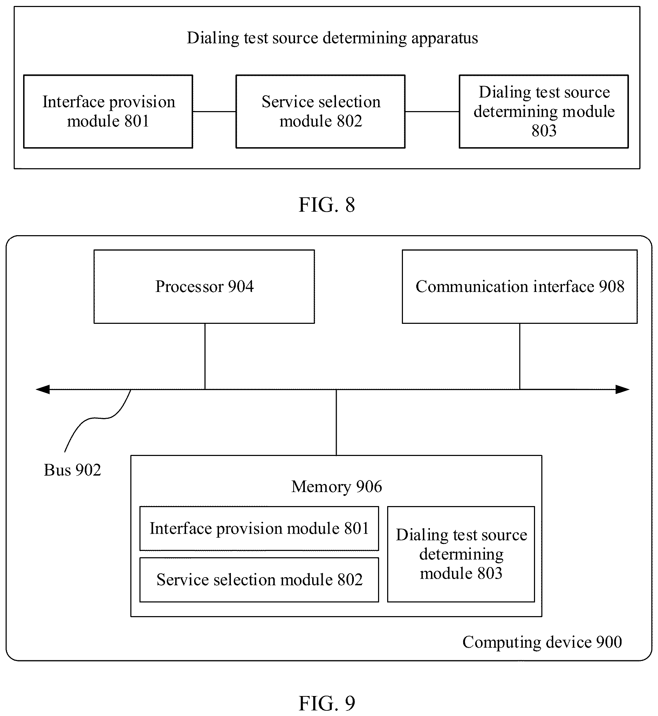

This application further provides a dialing test source determining apparatus. As shown in FIG. 8, the apparatus includes:
an interface provision module 801, configured to provide a configuration interface, where the configuration interface is configured to obtain a dialing test instruction that is set by a user, and the dialing test instruction includes a target service on which a dialing test is to be performed;
a service selection module 802, configured to obtain, from a database, a set of services that have called the target service, where the database includes a call relationship between multiple services including the target service; and
a dialing test source determining module 803, configured to determine a dialing test source based on at least one server corresponding to the set of services that have called the target service, where a server on which a service in the service set is deployed belongs to at least one network segment, and the at least one server also belongs to the at least one network segment.

The interface provision module 801, the service selection module 802, and the dialing test source determining module 803 may all be implemented by using software, or may be implemented by using hardware. For example, the following uses the interface provision module 801 as an example to describe an implementation of the interface provision module 801. Similarly, for implementations of the service selection module 802 and the dialing test source determining module 803, refer to the implementation of the interface provision module 801.

The module is used as an example of a software functional unit, and the interface provision module 801 may include code running on a computing instance. The computing instance may include at least one of a physical host (a computing device), a virtual machine, and a container. Further, there may be one or more computing instances. For example, the interface provision module 801 may include code running on multiple hosts/virtual machines/containers. It should be noted that the multiple hosts/virtual machines/containers used to run the code may be distributed in a same region (region), or may be distributed in different regions. Further, the multiple hosts/virtual machines/containers used to run the code may be distributed in a same availability zone (availability zone, AZ), or may be distributed in different AZs. Each AZ includes one data center or multiple data centers that are geographically close to each other. Generally, one region may include multiple AZs.

Similarly, the multiple hosts/virtual machines/containers used to run the code may be distributed in a same virtual private cloud (virtual private cloud, VPC), or may be distributed in multiple VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware function unit, and the interface provision module 801 may include at least one computing device like a server. Alternatively, the interface provision module 801 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the interface provision module 801 may be distributed in a same region, or may be distributed in different regions. The plurality of computing devices included in the interface provision module 801 may be distributed in a same AZ, or may be distributed in different AZs. Similarly, the multiple computing devices included in the interface provision module 801 may be distributed in a same VPC, or may be distributed in multiple VPCs. The plurality of computing devices may be any combination of computing devices such as a server, an ASIC, a PLD, a CPLD, an FPGA, and a GAL.

It should be noted that, in another embodiment, the interface provision module 801 may be configured to perform any step in the dialing test source determining method, the service selection module 802 may be configured to perform any step in the dialing test source determining method, and the dialing test source determining module 803 may be configured to perform any step in the dialing test source determining method. Steps that the interface provision module 801, the service selection module 802, and the dialing test source determining module 803 are responsible for implementing may be specified as required, and the interface provision module 801, the service selection module 802, and the dialing test source determining module 803 separately implement different steps in the dialing test source determining method, to implement all functions of the dialing test source determining apparatus.

This application further provides a computing device 900. As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that a quantity of processors and a quantity of memories in the computing device 900 are not limited in this application.

The bus 902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 9 for representation, but it does not indicate that there is only one bus or only one type of bus. The bus 902 may include a path for transferring information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a micro processor (micro processor, MP), and a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 906 stores executable program code, and the processor 904 executes the executable program code to separately implement functions of the interface provision module 801, the service selection module 802, and the dialing test source determining module 803, so as to implement the dialing test source determining method. In other words, the memory 906 stores instructions used to perform the dialing test source determining method.

The communication interface 908 uses a transceiver module, for example but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

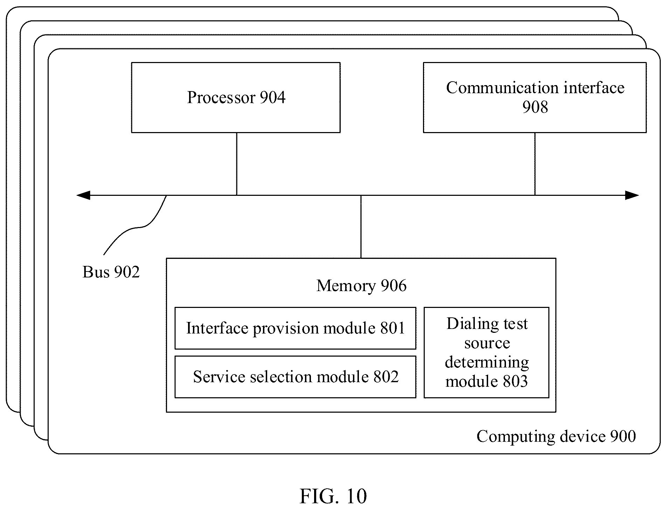

As shown in FIG. 10, the computing device cluster includes at least one computing device 900. A memory 906 of the one or more computing devices 900 in the computing device cluster may store same instructions used to perform the dialing test source determining method.

It should be noted that the foregoing dialing test system may be deployed in the computing device cluster.

In some possible implementations, the memory 906 of the one or more computing devices 900 in the computing device cluster may alternatively store some instructions used to perform the dialing test source determining method. In other words, a combination of the one or more computing devices 900 may jointly execute instructions used to perform the dialing test source determining method.

It should be noted that memories 906 in different computing devices 900 in the computing device cluster may store different instructions respectively used to perform some functions of the dialing test source determining apparatus. In other words, the instructions stored in the memories 906 in the different computing devices 900 may implement functions of one or more modules in the interface provision module 801, the service selection module 802, and the dialing test source determining module 803.

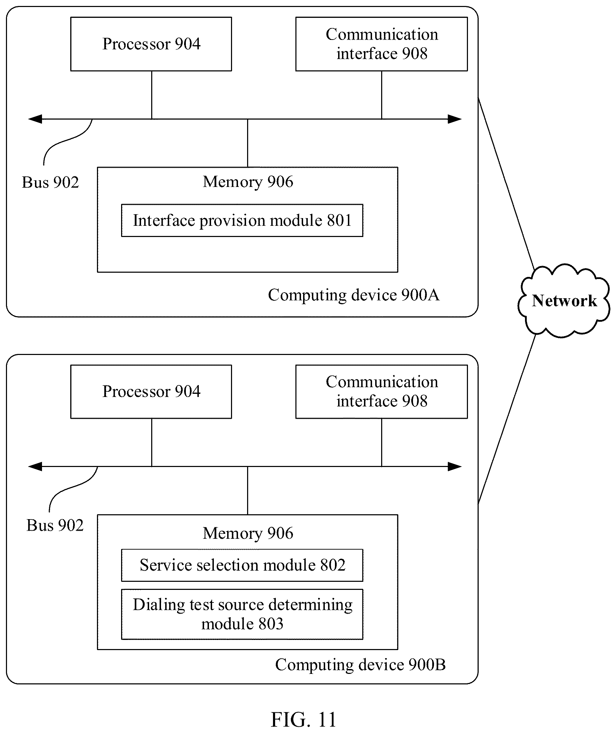

In some possible implementations, the one or more computing devices in the computing device cluster may be connected through a network. The network may be a wide area network, a local area network, or the like. FIG. 11 shows a possible implementation. As shown in FIG. 11, two computing devices 900A and 900B are connected through a network. Specifically, each computing device is connected to the network through a communication interface of the computing device. In this possible implementation, a memory 906 in the computing device 900A stores instructions for performing a function of the interface provision module 801. In addition, a memory 906 in the computing device 900B stores instructions for performing functions of the service selection module 802 and the dialing test source determining module 803.

In a connection manner between computing device clusters shown in FIG. 11, it may be considered that the dialing test source determining method provided in this application needs interaction with a user to obtain and process a dialing test instruction of the user. The interface provision module 801 is configured to interact with the user to obtain the dialing test instruction of the user. The service selection module 802 and the dialing test source determining module 803 are configured to process the dialing test instruction. Therefore, it is considered that the function implemented by the interface provision module 801 is performed by the computing device 900A, and it is considered that the functions implemented by the service selection module 802 and the dialing test source determining module 803 are performed by the computing device 900B.

It should be understood that functions of the computing device 900A shown in FIG. 11 may alternatively be completed by multiple computing devices 900. Similarly, functions of the computing device 900B may alternatively be completed by multiple computing devices 900.

An embodiment of this application further provides a computer program product including instructions. The computer program product may be a software or program product that includes instructions and that can run on a computing device or be stored in any usable medium. When the computer program product runs on at least one computing device, the at least one computing device is caused to perform the dialing test source determining method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the dialing test source determining method.

In the foregoing embodiments, the descriptions of each embodiment have respective focuses. For a part that is not described in detail or recorded in an embodiment, refer to related descriptions in other embodiments.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of the present invention.

The foregoing describes basic principles of this application with reference to specific embodiments. However, it should be noted that, advantages, benefits, effects, and the like mentioned in this application are merely examples rather than limitations, and it cannot be considered that these advantages, benefits, effects, and the like are mandatory for embodiments of this disclosure. In addition, the specific details disclosed above are merely intended for purpose of example and for ease of understanding, but are not intended to limit. The foregoing details do not limit a case in which the present disclosure needs to be implemented by using the foregoing specific details.

Block diagrams of components, apparatuses, devices, and systems in this disclosure are merely used as examples, and are not intended to require or imply that the components, apparatuses, devices, and systems need to be connected, arranged, and configured in a manner shown in the block diagrams. Persons skilled in the art will recognize that the components, the apparatuses, the devices, and the systems may be connected, arranged, and configured in any manner. Words such as "include", "contain", and "have" are open words, refer to "including but not limited to", and may be used interchangeably. The terms "or" and "and" used herein refer to the terms "and/or", and may be used interchangeably, unless the context explicitly indicates otherwise. The word "such as" used herein refers to a phrase "such as but not limited to", and may be used interchangeably.

It should be further noted that in the apparatuses, the devices, and the methods disclosed in this disclosure, the components or the steps may be decomposed and/or recombined. The decomposition and/or recombination should be considered as equivalent solutions of this disclosure.

The foregoing descriptions have been provided for the purpose of illustration and descriptions. In addition, the descriptions are not intended to limit embodiments of this disclosure to the form disclosed herein. Although multiple example aspects and embodiments have been discussed above, persons skilled in the art will recognize some of their variations, modifications, changes, additions, and sub-combinations.

It may be understood that various numbers in embodiments of this application are merely used for differentiation for ease of description, and are not used to limit the scope of embodiments of this application.

## Claims

1. A dialing test source determining method, applied to a cloud management platform, wherein the method comprises:
providing a configuration interface, wherein the configuration interface is configured to obtain a dialing test instruction that is set by a user, and the dialing test instruction comprises a target service on which a dialing test is to be performed;
obtaining, from a database, a set of services that have called the target service, wherein the database comprises a call relationship between multiple services comprising the target service; and
determining a dialing test source based on at least one server corresponding to the set of services that have called the target service, wherein a server on which a service in the service set is deployed belongs to at least one network segment, and the at least one server also belongs to the at least one network segment.

2. The method according to claim 1, wherein the dialing test source is deployed on a server that is in the at least one server and that belongs to the at least one network segment.

3. The method according to claim 1 or 2, wherein the method further comprises:
presenting information about the at least one service and/or information about the at least one server to the user.

4. The method according to any one of claims 1 to 3, wherein the service in the service set is deployed on the at least one server corresponding to the service set.

5. The method according to any one of claims 1 to 3, wherein at least one service selected from the service set is deployed on the at least one server corresponding to the service set.

6. The method according to claim 5, wherein the database further stores a call frequency of the service in the service set; and
the at least one selected service comprises a service that has a highest call frequency in multiple services that are at least a part of the service set, and a server on which the multiple services that are at least the part of the service set are deployed belongs to any one of the at least one network segment.

7. The method according to any one of claims 1 to 6, wherein the dialing test source is deployed on a server that is in the at least one server and on which the service in the service set is deployed.

8. The method according to any one of claims 1 to 7, wherein the database further stores a function call interface of the target service; and
the method further comprises:
selecting, from the dialing test source, a dialing test source that calls the function call interface; and
delivering, based on the function call interface, a dialing test request to the selected dialing test source that calls the function call interface, so that the selected dialing test source that calls the function call interface calls a function of the target service.

9. A dialing test source determining apparatus, used in a cloud management platform, wherein the apparatus comprises:
an interface provision module, configured to provide a configuration interface, wherein the configuration interface is configured to obtain a dialing test instruction that is set by a user, and the dialing test instruction comprises a target service on which a dialing test is to be performed;
a service selection module, configured to obtain, from a database, a set of services that have called the target service, wherein the database comprises a call relationship between multiple services comprising the target service; and
a dialing test source determining module, configured to determine a dialing test source based on at least one server corresponding to the set of services that have called the target service, wherein a server on which a service in the service set is deployed belongs to at least one network segment, and the at least one server also belongs to the at least one network segment.

10. The apparatus according to claim 9, wherein the dialing test source is deployed on a server that is in the at least one server and that belongs to the at least one network segment.

11. The apparatus according to claim 9 or 10, wherein the apparatus further comprises:
a presentation module, configured to present information about the at least one service and/or information about the at least one server to the user.

12. The apparatus according to any one of claims 9 to 11, wherein the service in the service set is deployed on the at least one server corresponding to the service set; or
at least one service selected from the service set is deployed on the at least one server corresponding to the service set.

13. The apparatus according to claim 12, wherein the database further stores a call frequency of the service in the service set; and
the at least one selected service comprises a service that has a highest call frequency in multiple services that are at least a part of the service set, and a server on which the multiple services that are at least the part of the service set are deployed belongs to any one of the at least one network segment.

14. The apparatus according to any one of claims 9 to 13, wherein the dialing test source is deployed on a server that is in the at least one server and on which the service in the service set is deployed.

15. The apparatus according to any one of claims 9 to 14, wherein the database further stores a function call interface of the target service; and
the apparatus further comprises:
a dialing test module, configured to: select, from the dialing test source, a dialing test source that calls the function call interface; and deliver, based on the function call interface, a dialing test request to the selected dialing test source that calls the function call interface, so that the selected dialing test source that calls the function call interface calls a function of the target service.

16. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 8.

17. A computer program product comprising instructions, wherein when the instructions are run by a computing device cluster, the computing device cluster is caused to perform the method according to any one of claims 1 to 8.

18. A computer-readable storage medium, comprising computer program instructions, wherein when the computer program instructions are executed by a computing device cluster, the computing device cluster performs the method according to any one of claims 1 to 8.
